# EUROPEAN PATENT SPECIFICATION

(11) **EP 2 846 008 B1**
(45) Date of publication and mention of the grant of the patent: **10.01.2018**
(21) Application number: 14183529.8
(22) Date of filing: 04.09.2014
(51) Int. Cl.: F01K 7/40, F01K 13/02, F01K 23/06, F01K 23/10, F22B 1/00, F22B 1/18

(54) **Steam turbine plant**
Dampfturbinenanlage
Centrale à turbine à vapeur

(30) Priority: 06.09.2013 JP 2013185682
(43) Date of publication of application: 11.03.2015
(73) Proprietor: Kabushiki Kaisha Toshiba, Tokyo (JP)
(72) Inventor: Goto, Koichi, Tokyo (JP); Okita, Nobuo, Tokyo (JP); Takahata, Kazuo, Tokyo (JP); Takahashi, Masahiko, Tokyo (JP)
(74) Representative: Hoffmann Eitle

(56) References cited:
- EP-A1- 0 299 555
- EP-A1- 2 623 864
- EP-A1- 2 811 124
- WO-A1-2011/028474
- WO-A1-2012/168251
- WO-A2-2012/131021
- DE-A1-102009 036 064
- FR-A1- 2 955 377
- JP-A- H08 246 812
- US-A1- 2006 254 251
- US-A1- 2010 089 059
- US-B1- 8 495 878

## Description

### FIELD OF THE INVENTION

An embodiment of the present invention relates to a steam turbine plant.

### BACKGROUND ART

US 8,495,878 describes a secondarily fueled boiler with a primary fueled Rankine steam cycle combustion system in a hybrid process. Outputs from the secondarily fueled combustion system are fed into the feed water heaters, the aerators, feed water heating line and/or heat lines of the primary fueled ranking system. The integrated steam flow eliminates or reduces one or more extractions from the steam turbine generator, thereby allowing it to generate more electrical power using the same Rankine system input energy or generate equivalent electrical power using energy inputs from multiple fuel sources.

WO 2011/028474 describes a hybrid power plant in which a pressurised water nuclear reactor or a biomass fueled power plant, which have a relatively low operating temperature, is combined with a coal or other fossil fuel power plant having a higher operating temperature.

WO 2012/131021 discloses a closed loop system for producing energy using an organic ranking cycle (ORC) and an ORC fluid, comprising a first solar power source configured to heat an ORC liquid to a saturated ORC liquid, a second solar power source fluidly connected to the first solar power source and configured to vaporize the saturated ORC liquid to become ORC vapor, and a turbo machine configured to receive ORC vapor and produce mechanical energy by expanding the ORC vapor.

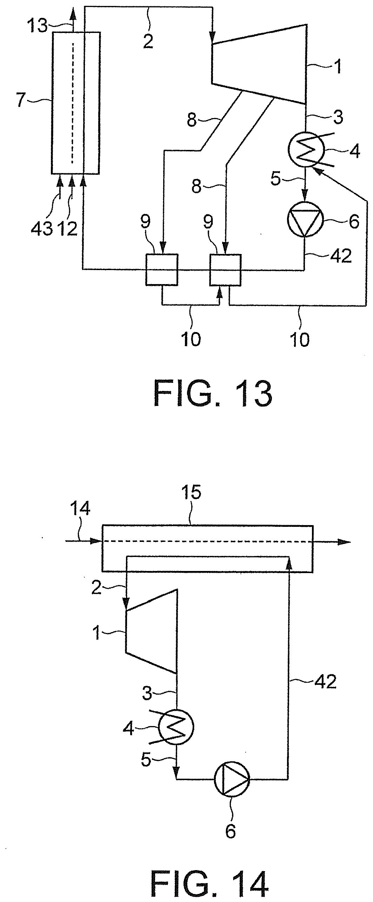

A steam turbine plant using a coal fired boiler 7 is described with reference to Fig. 13. A feed water 42 is transported to the coal fired boiler 7 by a feed pump 6, and is heated therein to change to a steam 2. Since the coal fired boiler 7 heats the feed water 42 by an exhaust combustion gas 13 that is generated by burning a coal 43, the coal fired boiler 7 is a heat source derived from a fossil fuel. Fig. 13 simply illustrates the exhaust combustion gas 13, the coal 43 flowing into the coal fired boiler 7 and a combustion air 12.

The steam 2 flows into a steam turbine 1 and expands inside the steam turbine 1, so that a pressure and a temperature thereof lower. A turbine exhaust gas 3 flows into a condenser 4. The turbine exhaust gas 3 is cooled by a cooling water in the condenser 4 to become a condensation 5. The condensation 5 merges with a drainage water 10 described below to become a feed water 42 so as to be circulated. Although not shown, the cooling water is drawn up by a not-shown cooling water pump from sea, and is then transported to the condenser 4. After heated in the condenser 4, the cooling water is returned to the sea.

A rotating shaft of the steam turbine 1, which is rotated by the expanding steam 2, is connected to a not-shown generator. Power is generated in the generator by using a generated shaft power. An extraction steam 8 extracted from a middle location of the steam turbine 1 flows into a feed water heater 9 so as to heat the feed water 42 transported by the feed pump 6. At this time, the extraction steam 8 condenses to become the drainage water 10, and finally merges with the condensation 5. When no steam is extracted from the steam turbine 1, the condensation 5 becomes the feed water 42 as it is.

A steam turbine plant constituting a part of a combined cycle is described with reference to Fig. 14. The same part as the technique shown in Fig. 13 is shown by the same reference number and detailed description thereof is omitted. Only a part different from the technique shown in Fig. 13 is described. A gas turbine exhaust gas 14 from a not-shown gas turbine, which has a sufficiently high temperature, is caused to flow into an exhaust gas boiler 15. A feed water 42 is transported to the exhaust gas boiler 15 by a feed pump 6, and is heated therein by the gas turbine exhaust gas 14 to change to a steam 2. Since a gas turbine generates an exhaust combustion gas by burning a natural gas or a town gas so as to be driven by the gas turbine exhaust gas 14, the exhaust gas boiler 15 is a kind of a heat source derived from a fossil fuel. After a temperature of the gas turbine exhaust gas 14 lowers, the gas turbine exhaust gas 14 flows out from the exhaust gas boiler 15. An extraction steam 8 is not extracted from a middle location of the steam turbine 1 in Fig. 14. However, similarly to Fig. 13, the extraction steam 8 may be extracted from a middle location of the steam turbine 1 and may be caused to flow into a feed water heater 9 so as to heat a feed water 42.

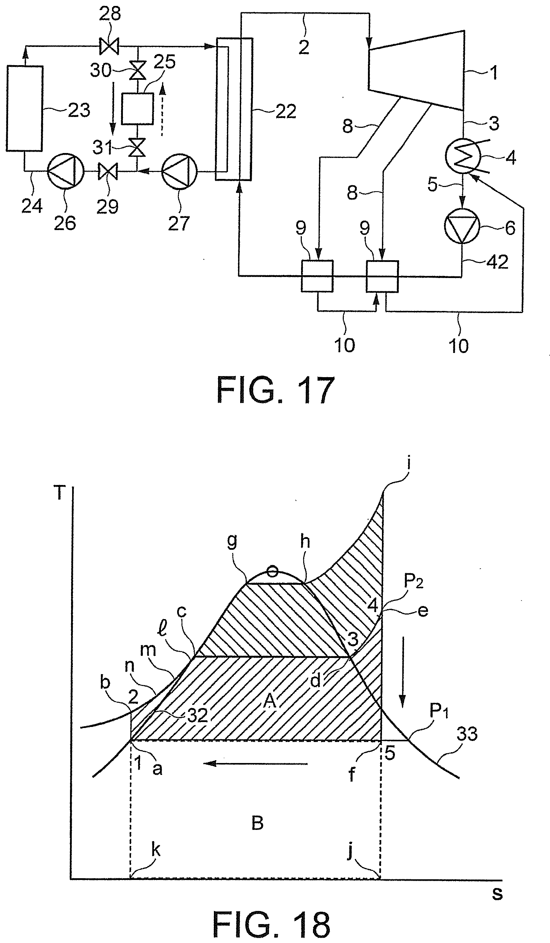

In a Rankine cycle, the higher the temperature and the pressure of a steam turbine inlet steam are, the higher the efficiency, i.e., the value of a steam turbine output with respect to a heat quantity received from a heating source is. A value obtained by multiplying a generator efficiency by the output is a power generation quantity. Fig. 18 shows a TS line diagram in which an axis of ordinate shows a temperature of a working fluid and an axis of abscissa shows an entropy. Curves 32 and 33 are a saturated liquid line and a saturated steam line. A steam turbine inlet, a steam turbine outlet (condenser inlet), a condenser outlet (feed pump inlet), and a feed pump outlet are shown by the reference characters e, f, a and b in Fig. 18. An area A is an area that is surrounded by "a, b, c, d, e and f", and an area B is an area that is surrounded by "f, j, k and a". A received heat quantity, a heat quantity to be released to a cooling water and a steam turbine output correspond to superficial dimensions of the areas A+B, the area B and the area A, respectively. The efficiency corresponds to an area ratio A/(A+B).

When a steam turbine inlet has a higher temperature and a higher pressure, a steam turbine inlet is "i" in Fig. 18, and the area A is an area A' that is surrounded by "a, b, c, g, h, i and f". The area B corresponding to a heat quantity to be released to a cooling water is unchanged. The areas A+B and the area A corresponding to a received heat quantity and a steam turbine output are changed to areas A'+B and an area A', respectively. Thus, the area ratio A'/(A'+B) is larger than A/(A+B). For this reason, an efficiency improves.

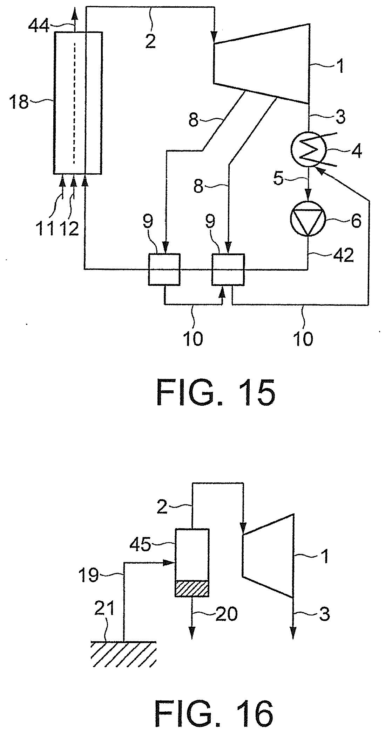

A general waste power generation is described with reference to Fig. 15. The same part as the technique shown in Fig. 13 is shown by the same reference number and detailed description thereof is omitted. Only a part different from the technique shown in Fig. 13 is described. A waste boiler 18 burns a waste, so as to heat water by a waste exhaust combustion gas 44. The waste exhaust combustion gas 44, a waste 11 flowing into the waste boiler 18 and a combustion air 12 are briefly illustrated. A feed water 42 is transported to the waste boiler 18 by a feed pump 6, and is heated therein to change to a steam 2. Since the waste exhaust combustion gas 44 contains a corrosive gas such as hydrogen chloride, a heat cannot be recovered only at a temperature that does not cause a high temperature corrosion in a boiler heat exchanger tube. In many cases, when a tube wall temperature of a boiler heat exchanger tube exceeds about 320°C, a high temperature corrosion is more likely to occur therein. Thus, a steam temperature is generally 300°C or less, for example. For this reason, a steam turbine inlet temperature cannot be raised only up to 300°C, for example. Although there is a case in which a steam turbine inlet temperature can be raised more, a steam turbine inlet temperature can be raised only up to 400°C or less at most. In the Rankine cycle, when the temperature and the pressure of the steam turbine inlet are higher, an efficiency can be raised. That is to say, a power generation efficiency cannot be raised. The waste power generation produces electricity after a waste has been appropriately treated. In order to make good use of an exhaust gas generated by the waste treatment, power generation is carried out although the efficiency is low.

A general geothermal power generation is described with reference to Fig. 16. The same part as the technique shown in Fig. 13 is shown by the same reference number and detailed description thereof is omitted. Only a part different from the technique shown in Fig. 13 is described. A geothermal steam 19 taken out from a ground 21 is caused to flow into a steam separator 45, so that the geothermal steam 19 is separated into a steam 2 and a hot water 20. The steam 2 flows into a steam turbine 1. The steam 2 expands inside the steam turbine 1, so that a pressure and a temperature thereof lower. A turbine exhaust gas 3 is released outside. Since a steam temperature is not more than 350°C in most cases, a steam turbine inlet temperature cannot be raised so that a power generation efficiency cannot be raised. In addition, a heat held by the hot water 20 is not efficiently used.

A general solar heat power generation is described in described with reference to Fig. 17. The same part as the technique shown in Fig. 13 is shown by the same reference number and detailed description thereof is omitted. Only a part different from the technique shown in Fig. 13 is described. A heating medium 24 receives a radiant heat of solar light so as to be heated in a solar heat collector 23. The heated heating medium 24 is diverged into two. One heating medium flows into a solar heat heater 22, and the other heating medium flows into a heat storage tank 25. A heating medium pump 27 is adjusted such that the heating medium flows in a direction drawn by a solid line on the left side of the heat storage tank 25. A part of the heating medium 24 flows into the solar heat heater to heat a feed water 42 to lose its temperature, and flows out therefrom. When a remaining part of the heating medium 24, which has heated the feed water 42, flows into the heat storage tank 25, the heating medium, which has been already therein and has a lower temperature, flows out from the heat storage tank 25, so that the heating medium 24 of a higher temperature is stored in the heat storage tank 25 in the end. After the heating medium 24 has been stored, valves 30 and 31 are totally closed. The heating medium 24 is transported by heating medium pumps 26 and 27. The feed water 42 is transported to the solar heat heater by a feed pump 6, and is heated therein to change to a steam 2. During a nighttime when no solar light exists or a time zone when only weak solar light exists, valves 28 and 29 are closed and the heating medium pump 26 is stopped, while the valves 30 and 31 are opened and the heating medium pump 27 is operated, so that the heating medium flows in a direction drawn by dotted lines on the right side of the heat storage tank 25. The feed water 42 is heated by circulating the heating medium 24 between the heat storage tank 25 and the solar heat heater 22, without circulating the heating medium 24 through the solar heat collector 23.

### [Prior Art Documents]

### [Patent Documents]

Patent Document 1: JP2008-39367A
Patent Document 2: JP2008-121483A
Patent Document 3: US-2006/0254251-A1
Patent Document 4: EP-0299555-A1

### SUMMARY OF THE INVENTION

In the techniques shown in Figs. 15 and 16, since a steam turbine inlet temperature cannot be raised, a power generation efficiency cannot be raised like the techniques shown in Figs. 13 and 14. Thus, improvement in power generation efficiency is desired. In addition, in the technique shown in Fig. 16, a heat held by the hot water 20 is desired to be efficiently used for power generation.

A fuel battery is a power generation method that is different from a turbine. The fuel battery releases a large amount of exhaust heat. However, an exhaust heat temperature is considerably lower than a temperature suited for a working fluid of a steam turbine. In addition, an industrial exhaust heat from factories and offices is discharged without being efficiently used. In most cases, a temperature of the exhaust heat is considerably lower than a temperature suited for a working fluid of the steam turbine 1. It is desired that these exhaust heats are efficiently used to generate power.

The object of the present invention is to carry out a highly efficient power generation by using a heat source whose steam turbine inlet temperature cannot be raised, and to generate power by efficiently using an exhaust heat having a considerably low temperature.

A steam turbine plant according to one embodiment is a steam turbine plant comprising: a steam turbine; a heating unit configured to produce steam from water, the steam to be supplied to the steam turbine;- a means for diverging the water into a second feed water and a third feed water on an upstream side of the heating unit; wherein the heating unit includes a first heater using a first heat source using a fossil fuel for heating the second feed water and producing the steam from the heated second feed water and- a third heater using a third heat source using other than a solar heat, not using a fossil fuel for heating the third feed water, and wherein the heated third feed water is merged into the heated second feed water flowing in the first heater.

### BRIEF DESCRIPTION OF THE DRAWINGS

Fig. 1 is a conceptual view showing a steam turbine plant according to a first embodiment.
Fig. 2 is a conceptual view showing a steam turbine plant according to a second embodiment.
Fig. 3 is a conceptual view showing a steam turbine plant according to a third embodiment and a fourth embodiment.
Fig. 4 is a conceptual view showing a steam turbine plant.
Fig. 5 is a conceptual view showing a steam turbine plant.
Fig. 6 is a conceptual view showing a steam turbine plant.
Fig. 7 is a conceptual view showing a steam turbine plant.
Fig. 8 is a conceptual view showing a steam turbine plant.
Fig. 9 is a conceptual view showing a steam turbine plant.
Fig. 10 is a conceptual view showing a steam turbine plant.
Fig. 11 is a conceptual view showing a steam turbine plant.
Fig. 12 is a conceptual view showing a steam turbine plant.
Fig. 13 is a conceptual view showing a steam turbine using a coal fired boiler.
Fig. 14 is a conceptual view showing a steam turbine of a combined cycle.
Fig. 15 is a conceptual view showing a technique of waste power generation.
Fig. 16 is a conceptual view showing a technique of geothermal power generation.
Fig. 17 is a conceptual view showing a technique of solar power generation.
Fig. 18 is a TS line diagram of a Rankine cycle.
Figs. 19(a) and (b) are conceptual views showing an effect of the embodiments.

### EMBODIMENTS FOR CARRYING OUT THE INVENTION

### First Embodiment

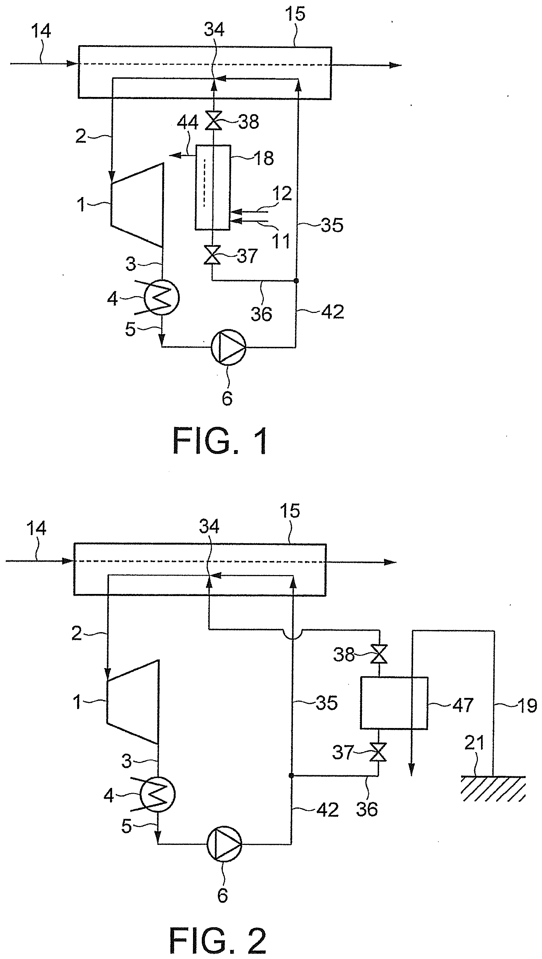

A steam turbine according to a first embodiment is described with reference to Fig. 1.

As shown in Fig. 1, a gas turbine exhaust gas 14 from a not-shown gas turbine, which has a sufficiently high temperature, is caused to flow into an exhaust gas boiler 15. A feed water 42 is transported to the exhaust gas boiler 15 by a feed pump 6, and is heated therein by a gas turbine exhaust gas 14 to change to a steam 2. Since the gas turbine generates an exhaust combustion gas by burning a natural gas or a town gas so as to be driven by the gas turbine exhaust gas 14, the exhaust gas boiler 15 is a heat source derived from a fossil fuel (first heat source).

After a temperature of the gas turbine exhaust gas 14 lowers, the gas turbine exhaust gas 14 flows out from the exhaust gas boiler 15. The steam 2 flows into the steam turbine 1, and expands inside the steam turbine 1, so that a pressure and a temperature thereof lower. A turbine exhaust gas 3 from the steam turbine 1 flows into a condenser 4. The turbine exhaust gas 3 is cooled by a cooling water in the condenser 4 to become a condensation 5. Although not shown, the cooling water is drawn up by a not-shown cooling water pump from sea, and is then transported to the condenser 4. After heated in the condenser 4, the cooling water is returned to the sea. A rotating shaft of the steam turbine 1, which is rotated by the expanding steam 2, is connected to a not-shown generator. Power is generated in the generator by using a generated shaft power.

As shown in Fig. 1, a waste boiler 18 is installed as a heater. To be specific, the feed water 42 is diverged into a second feed water 35 and a third feed water 36. The second feed water 35 is transported to the exhaust heat boiler 15, and is heated therein by the gas turbine exhaust gas 14 so as to have a higher temperature. The third feed water 36 flows into the waste boiler 18 as a heater, and is heated by a waste exhaust combustion gas (third heat source) 44, which is generated by burning a waste 11 and a combustion air 12, so as to have a higher temperature. Since a pressure of the third feed water 36, which is equal to a pressure of the second feed water 35 for a high-temperature high-pressure turbine, is higher than a pressure for a waste power generation, the third feed water 36 does not basically boil. Thus, the waste boiler 18 functions only as a hot water boiler. After that, the third feed water 36 flows into a middle location of the exhaust heat boiler 15, and merges with the second feed water 35, which has been heated by the exhaust heat boiler 15, at a merging point 34. A temperature of the third feed water 36 is restricted in terms of high temperature corrosion. It is preferable that the merging point 34 is located such that the temperature of the second feed water 35 and the temperature of the third feed water 36 are substantially equal to each other, but it is not a must.

In the waste boiler 18, a composition of the waste 11 and an amount of the waste 11 to be treated may considerably vary, but a property of the steam 2 flowing into the steam turbine 1 should not considerably vary. In a general steam turbine plant, a temperature and a pressure of the steam 2 are measured, and the temperature and the pressure should not considerably vary. In addition, in a general steam turbine plant, a flow rate of the steam 2 is obtained by measuring a flow rate of the feed water 42, for example, and the flow rate of the steam 2 should not considerably vary.

For this reason, it is preferable that an output of the feed pump 6 is adjusted so as to adjust a flow rate and a pressure of the feed water 42, that a flow rate ratio between the second feed water 35 and the third feed water 36 is adjusted by adjusting opening degrees of the valves 37 and 38, and that, depending on cases, an amount of the waste 11 to be treated is increased or decreased, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve. A pressure of the third feed water 36, which is a working fluid of the waste boiler 18, is adjusted by the feed pump 6. The pressure of the third feed water 36 is a pressure for a high-temperature high-pressure turbine, similarly to the technique shown in Fig. 14. Thus, the pressure of the third feed water 36 is higher than that in the technique shown in Fig. 15. In Fig. 18, the merging point 34 is shown by 1. If the pressure of the third feed water 36 at the merging point 34 is higher and the third feed water 36 is changed to a saturated steam, it is preferable that a wetness of the second feed water 35 and a wetness the third feed water 36 are substantially equal to each other, but it is not a must. The merged water is further heated by the exhaust heat boiler 15 so as to change to the steam 2. Then, the steam 2 flows into the steam turbine 1. In Fig. 18, the water is heated in parallel by two kinds of heat sources from b to l, and is heated by one kind of heat source from l to i. When the third feed water 36 is not circulated because the waste boiler 18 is stopped and the like, the valves 37 ad 38 are totally closed. In general, since a steam flow rate in the waste power generation is sufficiently smaller than a steam flow rate in the combined cycle, even if the flow rate of the steam 2 somewhat lowers, the steam turbine 1 can be operated.

Suppose that the exhaust heat boiler 15 and the waste boiler 18 are connected in series with respect to the water. In this case, since a temperature of the gas turbine exhaust gas 14 does not lower down to a water temperature at an outlet of the waste boiler 18, a heat of the gas turbine exhaust gas 14 cannot be recovered at a temperature lower than that. On the other hand, according to this embodiment, since an upstream side of the exhaust heat boiler 15 and the waste boiler 18 are in parallel with respect to the feed water, a heat recovery from the gas turbine exhaust gas 14 will not be restricted for its existence. In addition, an outlet temperature of the exhaust gas of the exhaust heat boiler 15 is equal to the technique shown in Fig. 14, a received heat quantity from the exhaust heat boiler 15 is equal to the technique shown in Fig. 14. Thus, as the Rankine cycle, a received heat quantity is increased by a heat received from the waste boiler 18, so that a flow rate of the steam 2 is increased to increase an output, while a steam turbine inlet temperature is unchanged. An efficiency of the Rankine cycle is determined only by the area ratio in the TS line diagram, regardless of a flow rate. Since all the steam constitutes the Rankine cycle of a high temperature and a high pressure, an efficiency according to this embodiment is equal to the technique shown in Fig. 14. In addition, as compared with a case in which the technique shown in Fig. 14 and the technique shown in Fig. 15 separately exist, an output of this embodiment is large and an efficiency is high even if the same received heat quantity is generated. Thus, a highly efficient power generation can be carried out by using the heat from the waste boiler 18 from which a highly efficient power generation was impossible. Since the operation of the gas turbine is not influenced, there is no possibility that a power generation output and an efficiency of the gas turbine are degraded.

The structure shown in Fig. 1 is nothing more than an example, and the merging point at which the second feed water 35 and the third feed water 36 merge with each other may not the middle location of the exhaust heat boiler 15, but may be a location that is downstream of the outlet thereof. In addition, similarly to Fig. 13, an extraction steam 8 extracted from a middle location of the steam turbine 1 may be caused to flow into a feed water heater 9 so as to heat the feed water 42.

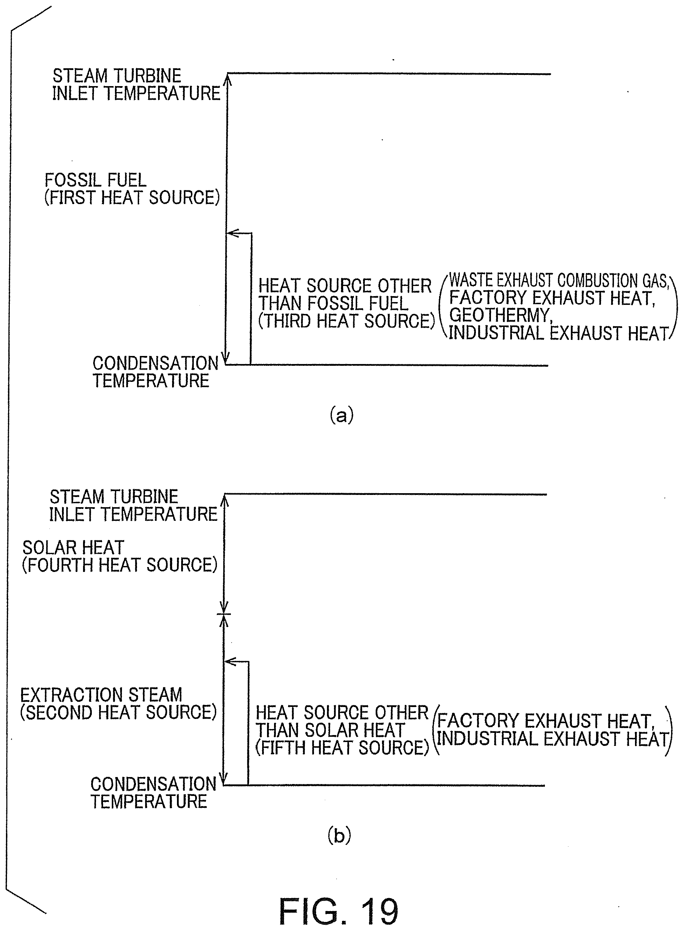

An effect of this embodiment is described with reference to Fig. 19. As shown in Fig. 19(a), a feed water is heated from a condensation temperature to a steam turbine inlet temperature in the following manner. The feed water of a lower temperature zone of a lower temperature is heated by the exhaust heat boiler 15 using the heat source derived from a fossil fuel (first heat source) and the waste exhaust combustion gas which is the heat source other than a fossil fuel (third heat source). The feed water of a higher temperature zone of a higher temperature is heated by the exhaust heat boiler 15 using the heat source derived from a fossil fuel (first heat source).

In this manner, since the feed water of the lower temperature zone is heated also by the waste exhaust combustion gas, and a high temperature steam flowing into the the steam turbine 1 is reliably generated by the the exhaust heat boiler 15 derived from a fossil fuel, the waste exhaust combustion gas of a lower temperature, which has not been used heretofore in the steam turbine 1, can be efficiently used to improve a power generation efficiency.

### Second Embodiment

Next, the steam turbine plant according to a second embodiment is described with reference to Fig. 2.

In the steam turbine plant shown in Fig. 2, the same part as that of the steam turbine plant shown in Fig. 1 is shown by the same reference number and detailed description thereof is omitted.

As shown in Fig. 2, there is installed a heater 47 for heating a steam 2 by a geothermal steam 19. Differently from the technique shown in Fig. 16, in Fig. 2, the geothermal steam 19 (third heat source) taken out from a ground 21 is caused to flow directly into a heater 47. A third feed water 36 flows into the heater 47 and is heated by the geothermal steam 19 so as to have a higher temperature. Since a pressure of the the third feed water 36 is equal to a pressure of the second feed water 35 for a high-temperature high-pressure turbine, the third feed water 36 does not basically boil. After that, the third feed water 36 flows into a middle location of an exhaust heat boiler 15, and merges with the second feed water 35, which has been heated by the exhaust heat boiler 15. A temperature of the third feed water 36 is not raised to a temperature of the geothermal steam 19. It is preferable that the merging point 34 is located such that the temperature of the second feed water 35 and the temperature of the third feed water 36 are substantially equal to each other, but it is not a must.

A flow rate and a temperature of the geothermal steam 19 may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam 2 is obtained by measuring a flow rate of the water 42, for example, and the flow rate of the steam 2 should not considerably vary.

For this reason, it is preferable that an output of the feed pump 6 is adjusted so as to adjust a flow rate and a pressure of the feed water 42, that a flow rate ratio between the second feed water 35 and the third feed water 36 is adjusted by adjusting opening degrees of valves 37 and 38, and that, depending on cases, a flow rate of the geothermal steam 19 is increased or decreased by a not-shown flow-rate adjusting valve, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve. Since a pressure of the third feed water 36, which is adjusted by the feed pump 6, is a pressure for a high-temperature high-pressure turbine similarly to the technique shown in Fig. 14, the pressure of the third feed water 36 is higher than a pressure of the geothermal steam 19 in the technique shown in Fig. 16. Thus, the third feed water 36 does not boil even partially. A merging point 34 is shown by m in Fig. 18. The merged water is heated by the exhaust heat boiler 15 so as to change to a steam 2. Then, the steam 2 flows into the steam turbine 1. In Fig. 18, when the merging point 34 is shown by m, the water is heated in parallel by two kinds of heat sources from b to m, and is heated by one kind of heat source from m to i. When the third feed water 36 is not circulated through a heater 47 for some reason or other, the valves 37 and 38 are totally closed. Since a flow rate of the third feed water 36 is sufficiently smaller than a flow rate of the second feed water 35, even if the flow rate of the steam 2 somewhat lowers, the steam turbine 1 can be operated.

In the technique shown in Fig. 16, a temperature of the steam 2 separated by a steam separator 45 is the same as a temperature of the geothermal steam 19. On the other hand, according to this embodiment, since the third feed water 36 is heated by the geothermal steam 19, a temperature of the third feed water 36 is lower than the temperature of the geothermal steam 19. However, since a heat of the hot water 20, which is thrown away in the technique shown in Fig. 16, is recovered in this embodiment, a heat recovery quantity from the geothermal steam 19 is larger. In addition, according to this embodiment, since all the steam constitutes the Rankine cycle of a high temperature and a high pressure, an efficiency according to this embodiment is equal to the technique shown in Fig. 14. As compared with a case in which the technique shown in Fig. 14 and the technique shown in Fig. 15 separately exist, an output of this embodiment is large and an efficiency is high even if the received heat quantity is the same. Further, the received heat quantity in Example 2 is larger. Thus, a highly efficient power generation can be carried out by using the geothermal steam from which a highly efficient power generation was impossible. Since the operation of the gas turbine is not influenced, there is no possibility that a power generation output and an efficiency of the gas turbine are degraded.

The structure shown in Fig. 2 is nothing more than an example, and the merging point 34 at which the second feed water 35 and the third feed water 36 merge with each other may not the middle location of the exhaust heat boiler 15, but may be a location that is downstream of the outlet thereof.

An effect of this embodiment is described with reference to Fig. 19. As shown in Fig. 19(a), a feed water is heated from a condensation temperature to a steam turbine inlet temperature in the following manner. The feed water of a lower temperature zone is heated by the exhaust heat boiler 15 using the heat source derived from a fossil fuel (first heat source) and the geothermal steam which is the heat source other than a fossil fuel (third heat source). The feed water of a higher temperature zone is heated by the exhaust heat boiler 15 using the heat source derived from a fossil fuel (first heat source).

In this manner, since the feed water of the lower temperature zone is heated also by the geothermal steam, and a high temperature steam flowing into the steam turbine 1 is reliably generated by the exhaust heat boiler 15 derived from a fossil fuel, the geothermal steam of a lower temperature, which has not been used heretofore in the steam turbine 1, can be efficiently used to improve a power generation efficiency.

### Third Embodiment

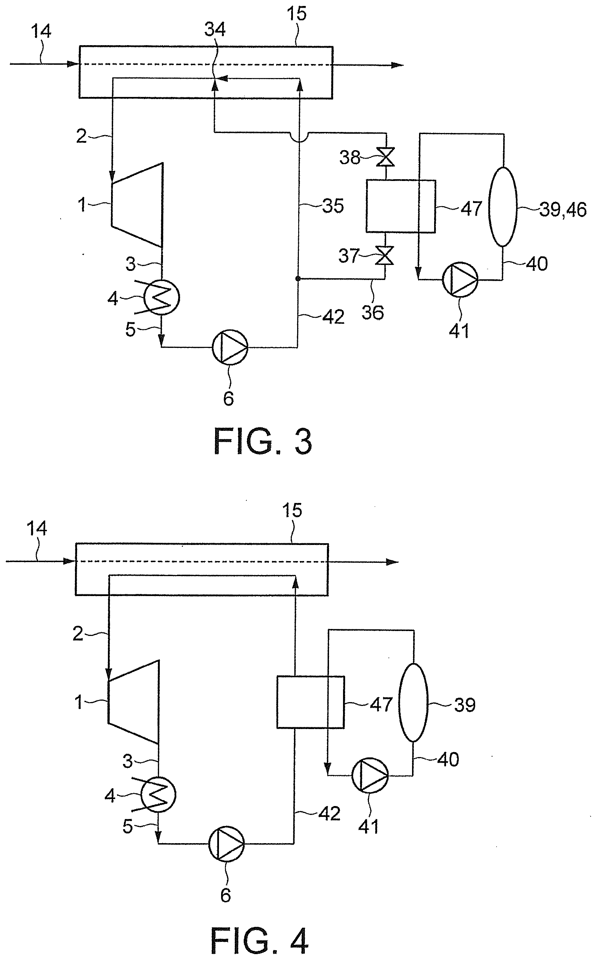

Next, the steam turbine plant according to a third embodiment is described with reference to Fig. 3.

In the steam turbine plant shown in Fig. 3, the same part as that of the steam turbine plant shown in Fig. 1 is shown by the same reference number and detailed description thereof is omitted.

As shown in Fig. 3, there is installed a heater 47. In Fig. 3, the heater 47 is configured to heat a third feed water 36 by a heat recovery water (third heat source) 40 which recovers an industrial exhaust heat. The industrial exhaust heat is an exhaust heat generated from a factory or an office building. In general, the industrial heat is recovered by the heat recovery water 40 that circulates up to a cooling water, and is released to an atmospheric air from the cooling tower. The heat recovery water 40 is caused to circulate, not through the cooling tower, but through the heater 47. The heat recovery water 40, which recovers heat from an industrial exhaust heat source 39, is circulated by a recovery water pump 41. A temperature of the heat recovery water 40 upon recovery of the industrial exhaust heat is lower, as a circulation flow rate thereof is larger. It is preferable that the flow rate of the heat recovery water 40 is higher than a flow rate of a feed water 42. Since a pressure of the heat recovery water 40, which is a pressure for a high-temperature high-pressure turbine, is high, the heat recovery water 40 is not generally heated to a temperature as a boiling point at its pressure. The third feed water 36 flows into the heater 47, and is heated by the heat recovery water 40 so as to have a higher temperature. After that, the third feed water 36 flows into a middle location of an exhaust heat boiler 15, and merges with a second feed water 35, which has been heated by the exhaust heat boiler 15. It is preferable that the merging point 34 is located such that a temperature of the second feed water 35 and a temperature of the third feed water 36 are substantially equal to each other, but it is not a must.

A heat quantity of the industrial steam may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam 2 is obtained by measuring a flow rate of the water 42, for example, and the flow rate of the steam 2 should not considerably vary.

For this reason, it is preferable that an output of the feed pump 6 is adjusted so as to adjust a flow rate and a pressure of the feed water 42, that a flow rate ratio between the second feed water 35 and the third feed water 36 is adjusted by adjusting opening degrees of the valves 37 and 38, and that, depending on cases, a flow rate of the heat recovery water 40 is increased or decreased by adjusting an output of the recovery pump water 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve. The merged water is heated by the exhaust heat boiler 15 so as to change to the steam 2. Then, the steam 2 flows into the steam turbine 1. In Fig. 18, the water is heated in parallel by two kinds of heat sources from b to n, and is heated by one kind of heat source from n to i. When the third feed water 36 is not circulated through a heater 47 for some reason or other, the valves 37 and 38 are totally closed. Since a flow rate of the third feed water 36 is sufficiently smaller than a flow rate of the second feed water 35, even if the flow rate of the steam 2 somewhat lowers, the steam turbine 1 can be operated.

According to this embodiment, when an outlet temperature of the gas turbine exhaust gas 14 of the exhaust gas boiler 15 is equal to the technique shown in Fig. 14, a received heat quantity from the exhaust gas boiler 15 is equal to the technique shown in Fig. 14. Thus, as the Rankine cycle, a received heat quantity is increased by a heat received from the heat recovery water 40, so that a flow rate of the steam 2 is increased to increase an output, while a steam turbine inlet temperature is unchanged. An efficiency of the Rankine cycle is determined only by the area ratio in the TS line diagram, regardless of a flow rate. In addition, according to this embodiment, since all the steam constitutes the Rankine cycle of a high temperature and a high pressure, an efficiency according to this embodiment is equal to the technique shown in Fig. 14. Moreover, according to this embodiment, a highly efficient power generation can be carried out by using the industrial exhaust heat which is discharged without being efficiently used. Since the operation of the gas turbine is not influenced, there is no possibility that a power generation output and an efficiency of the gas turbine are degraded.

An effect of this embodiment is described with reference to Fig. 19. As shown in Fig. 19(a), a feed water is heated from a condensation temperature to a steam turbine inlet temperature in the following manner. The feed water of a lower temperature zone is heated by the exhaust heat boiler 15 using the heat source derived from a fossil fuel (first heat source) and the heat recovery water which is the heat source other than a fossil fuel (third heat source). The feed water of a higher temperature zone is heated by the exhaust heat boiler 15 using the heat source derived from a fossil fuel (first heat source).

In this manner, since the feed water of the lower temperature zone is heated also by the heat recovery water, and a high temperature steam flowing into the steam turbine 1 is reliably generated by the exhaust heat boiler 15 derived from a fossil fuel, the heat recovery water of a lower temperature, which has not been used heretofore in the steam turbine 1, can be efficiently used to improve a power generation efficiency.

### Fourth Embodiment

Next, the steam turbine plant according to a fourth embodiment is described with reference to Fig. 3.

In the third embodiment, the heat recovery water (third heat source) 40 recovers the industrial exhaust heat. On the other hand, in the fourth embodiment, the heat recovery water 40 recovers all or a part of an exhaust heat of a fuel battery 46. As shown in Fig. 3, when the fuel battery 46 generates power by using a fossil fuel, a large amount of exhaust heat is generated. The exhaust heat of the large-sized fuel battery 46, which generates power of a large capacity, is recovered by the heat recovery water 40. In general, the heat recovery water 40 is variously used so that a temperature thereof lowers, and the heat recovery water 40 is finally released to an atmospheric air from a cooling tower so as to be circulated. The heat recovery water 40 is caused to circulate, not through the cooling tower, but through a heater 47. At this time, the heat recovery water 40 may not be variously used but may be caused to circulate directly through the heater 47. A temperature of the heat recovery water 40 upon recovery of the industrial exhaust heat is lower, as a circulation flow rate thereof is larger. It is preferable that the flow rate of the heat recovery water 40 is higher than a flow rate of a feed water 42. Since a pressure of the heat recovery water 40, which is a pressure for a high-temperature high-pressure turbine, is high, the heat recovery water 40 is not generally heated to a temperature as a boiling point at its pressure. A heat quantity of the exhaust heat of the fuel battery 46 may vary depending on an operation of the fuel battery 46, but a property of a steam 2 flowing into a steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary. For this reason, it is preferable that an output of the feed pump 6 is adjusted so as to adjust a flow rate and a pressure of the feed water 42, that a flow rate ratio between a second feed water 35 and a third feed water 36 is adjusted by adjusting opening degrees of valves 37 and 38, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

Similarly to the third embodiment, a highly efficient power generation can be carried out by using all or a part of the exhaust heat of the fuel battery 46 which is discharged without being efficiently used. Since the operation of the gas turbine is not influenced, there is no possibility that a power generation output and an efficiency of the gas turbine are degraded.

### Other arrangement

Next, a steam turbine plant is described with reference to Fig. 4.

In the steam turbine plant shown in Fig. 4, the same part as that of the steam turbine plant shown in Fig. 3 is shown by the same reference number and detailed description thereof is omitted.

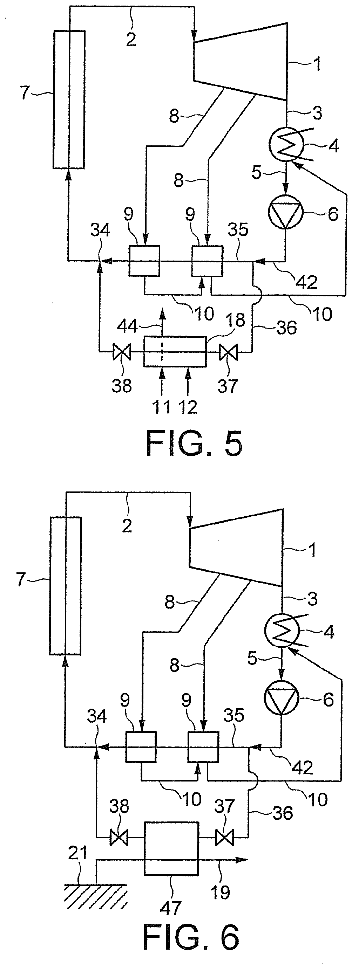

As shown in Fig. 4, a heater 47 is installed. In Fig. 5, the heater 47 is a heater configured to heat a steam 2 by a heat recovery water 40 that recovers an industrial exhaust heat. A feed water 42 is transported to the heater 47, and is heated by the heat recover water (third heat source) 40 so as to have a higher temperature. The feed water 42 flowing out from the heater 47 flows into an exhaust heat boiler 15. The feed water 42 is heated by a gas turbine exhaust gas 14 so as to change to a steam 2.

When the gas turbine exhaust gas 14 heats the feed water 42, a temperature thereof lowers. However, a surface temperature of a metal of the exhaust heat boiler 15 in contact with the gas turbine exhaust gas 14 should not lower down to a low temperature corrosion temperature zone. Depending on a composition of a natural gas or a town gas, the temperature is 150°C, for example. If a temperature of the industrial exhaust heat is higher than the temperature, when the exhaust heat boiler 15 and the heater 47 are connected in series with respect to the feed water 42, a temperature of the gas turbine exhaust gas 14 does not lower down to the temperature of the feed water 42 at an outlet of the heater 47. Thus, a heat cannot be received from the gas turbine exhaust gas 14 subsequently. However, since the temperature of the industrial exhaust heat is generally lower than the low temperature corrosion temperature zone, there is no possibility that a heat received from the gas turbine exhaust gas 14 decreases. Since the industrial exhaust heat has a relatively lower temperature but an amount thereof is large, it is preferable that heat is exchanged between the industrial exhaust heat and the feed water 42, while a temperature difference between the industrial exhaust heat and the feed water 42 is sufficiently maintained. The arrangement of the heater 47 is effective in terms thereof.

A heat quantity of the industrial exhaust heat may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary. For this reason, it is preferable that an output of the feed pump 6 is adjusted so as to adjust the flow rate and the pressure of the feed water 42, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

Although the industrial exhaust heat is used in this arrangement, a heat to be used is not limited thereto. In addition, the number of the feed water heaters 9 may be one.

### Other arrangement

Next, a steam turbine plant is described with reference to Fig. 5.

In the steam turbine plant shown in Fig. 5, the same part as that of the steam turbine plant shown in Fig. 1 is shown by the same reference number and detailed description thereof is omitted.

As shown in Fig. 5, a waste boiler 18 is installed as a heater. A feed water 42 is diverged into a second feed water 35 and the third feed water 36. The second feed water 35 is transported to a group of one or more feed water heaters 9 (two in Fig. 5) that are connected in series. The second feed water 35 is heated therein by an extracted steam 8 to have a higher temperature. The third feed water 36 flows into the waste boiler 18 as a heater 47, and is heated by a waste exhaust combustion gas 44 so as to have a higher temperature.

Since a pressure of the third feed water 36, which is equal to a pressure of the second feed water 35 for a high-temperature high-pressure turbine, is higher than a pressure in a waste power generation, the third feed water 36 does not basically boil. Thus, the waste boiler 18 functions only as a hot water boiler. Thereafter, the third feed water 36 flows into an outlet or a middle location of the group of the feed water heaters 9, and merges with the second feed water 35 which has been heated by the feed water heater 9 disposed on an upstream thereof.

A temperature of the third feed water 36 is restricted in terms of high temperature corrosion. It is preferable that the merging point 34 is located such that the temperature of the second feed water 35 and the temperature of the third feed water 36 are substantially equal to each other, but it is not a must.

In the waste boiler 18, a composition of the waste 11 and an amount of the waste 11 to be treated may considerably vary, but a property of the steam 2 flowing into the steam turbine 1 should not considerably vary. In a general steam turbine plant, a temperature and a pressure of the steam 2 are measured, and the temperature and the pressure should not considerably vary. In addition, in a general steam turbine plant, a flow rate of the steam 2 is obtained by measuring a flow rate of the feed water 42, for example, and the flow rate of the steam 2 should not considerably vary. For this reason, an output of the feed pump 6 is adjusted so as to adjust a flow rate and a pressure of the feed water 42, and a flow rate ratio between the second feed water 35 and the third feed water 36 is adjusted by adjusting opening degrees of valves 37 and 38, in order that the temperature, the pressure and the flow rate of the steam 2 do not considerably vary. In addition, it is preferable that an output of a coal fired boiler 7 is increased or decreased, and that, depending on cases, an amount the waste 11 to be treated is increased or decreased. At this time, although not shown, a flow-rate adjusting valve may be installed on a downstream of the feed pump 6, so as to adjust the flow rate and the pressure of the feed water 42 by adjusting an opening degree of the flow-rate adjusting valve.

A pressure of the third feed water 36, which is a working fluid of the waste boiler, is adjusted by the feed pump 6. The pressure of the third feed water 36 is a pressure for a high-temperature high-pressure turbine similarly to the technique shown in Fig. 14. Thus, the pressure of the third feed water 36 is higher than a pressure of the technique shown in Fig. 15. In Fig. 18, the merging point 34 is shown by 1. If there is the feed water heater 9 downstream of the merging point 34, the merged water is heated by the same. After that, the merged water flows into the coal fired boiler 7, and is heated by the coal fired boiler 7 so as to change to a steam 2. Then, the steam 2 flows into the steam turbine 1. When the third feed water 36 is not circulated for some reason or other, the valves 37 and 38 are totally closed. Since a flow rate of the third feed water 36 is sufficiently smaller than a flow rate of the second feed water 35, even if the flow rate of the steam 2 somewhat lowers, the steam turbine 1 can be operated.

Similarly to the embodiment shown in Fig. 1, since all the steam constitutes the Rankine cycle of a high temperature and a high pressure, an efficiency according to this arrangement is equal to the technique shown in Fig. 13. In addition, as compared with a case in which the technique shown in Fig. 13 and the technique shown in Fig. 15 separately exist, an output of this arrangement is large and an efficiency is high even if the same received heat quantity is generated. Thus, a highly efficient power generation can be carried out by using the heat from the waste boiler 18 which from which a highly efficient power generation was impossible.

The structure shown in Fig. 5 is nothing more than an example, and the merging point 34 at which the second feed water 35 and the third feed water 36 merge with each other may not be located between the most downstream feed water heater and the coal fired boiler 7, but may be a middle location of the group of two or more feed water heaters 9. Namely, the feed water heater may be provided downstream of the merging point 34. In addition, the number of the feed water heaters 9 may be one.

Further, the one or more feed water heaters 9 may be disposed not only on an upstream side of the diverging point of the second feed water 35 and the third feed water 36, but also on a downstream side thereof.

### Other arrangement

Next, a steam turbine plant is described with reference to Fig. 6.

In the steam turbine plant shown in Fig. 6, the same part as that of the steam turbine plant shown in Fig. 5 is shown by the same reference number and detailed description thereof is omitted.

As shown in Fig. 6, there is installed a heater 47 configured to heat a steam 2 by a geothermal steam 19. According to this arrangement, the geothermal steam 19 (third heat source) directly flows into the heater 47. A third feed water 36 flows into the heater 47, and is heated by the geothermal steam 19 so as to have a higher temperature. Since a pressure of the third feed water 36 is equal to a pressure of a second feed water 35 for a high-temperature high-pressure turbine, the third feed water 36 does not basically boil. Thereafter, the third feed water 36 flows into an outlet or a middle location of a group of feed water heaters 9, and merges with the second feed water 35 which has been heated by the feed water heater 9 disposed on an upstream thereof. A temperature of the third feed water 36 does not raise up to a temperature of the geothermal steam 19. It is preferable that the merging point 34 is located such that the temperature of the second feed water 35 and the temperature of the third feed water 36 are substantially equal to each other, but it is not a must.

A flow rate and a temperature of the geothermal steam 19 may considerably vary, but a property of the steam 2 flowing into a steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of a water 42, for example, and the flow rate of the steam 2 should not considerably vary. For this reason, an output of the feed pump 6 is adjusted so as to adjust a flow rate and a pressure of the feed water 42, a flow rate ratio between the second feed water 35 and the third feed water 36 is adjusted by adjusting opening degrees of valves 37 and 38, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve. In addition, it is preferable that an output of the coal fired boiler 7 is increased or decreased, and that, depending on cases, a flow rate of the geothermal steam 19 is increased or decreased by a not-shown flow-rate adjusting valve. A pressure of the third feed water 36, which is adjusted by the feed pump 6, is a pressure for a high-temperature high-pressure turbine similarly to the technique shown in Fig. 13. Thus, the pressure of the third feed water 36 is higher than a pressure of the geothermal steam 19 in the technique shown in Fig. 16. Therefore, the third feed water 36 does not boil even partially. A merging point 34 is shown by m in Fig. 18. If there is the feed water heater 9 downstream of the merging point 34, the merged water is heated by the same. After that, the merged water flows into the coal fired boiler 7, and is heated by the coal fired boiler 7 so as to change to a steam 2. Then, the steam 2 flows into the steam turbine 1. When the third feed water 36 is not circulated for some reason or other, the valves 37 and 38 are totally closed. Since a flow rate of the third feed water 36 is sufficiently smaller than a flow rate of the second feed water 35, even if the flow rate of the steam 2 somewhat lowers, the steam turbine 1 can be operated.

In the technique shown in Fig. 16, a temperature of the steam 2 separated by a steam separator 45 is the same as a temperature of the geothermal steam 19. On the other hand, according to this arrangement, since the third feed water 36 is heated by the geothermal steam 19, a temperature of the third feed water 36 is lower than the temperature of the geothermal steam 19. However, since a heat of the hot water 20, which is thrown away in the technique shown in Fig. 16, is recovered in this arrangement, a heat recovery quantity from the geothermal steam 19 is larger according to this arrangement. In addition, similar to the arrangement shown in Fig. 5, since all the steam constitutes the Rankine cycle of a high temperature and a high pressure, an efficiency according to this arrangement is equal to the technique shown in Fig. 13. In addition, as compared with a case in which the technique shown in Fig. 13 and the technique shown in Fig. 15 separately exist, an output of this arrangement is large and an efficiency is high even if the same received heat quantity is generated. Thus, a highly efficient power generation can be carried out by using the heat from the waste boiler 18 from which a highly efficient power generation was impossible.

The structure shown in Fig. 6 is nothing more than an example, and the merging point 34 at which the second feed water 35 and the third feed water 36 merge with each other may not be located between the most downstream feed water heater and the coal fired boiler 7, but may be a middle location of the group of two or more feed water heaters 9. Namely, the feed water heater may be provided downstream of the merging point 34. In addition, the number of the feed water heaters 9 may be one.

Further, the one or more feed water heaters 9 may be disposed not only on an upstream side of the diverging point of the second feed water 35 and the third feed water 36, but also on a downstream side thereof.

### Other arrangement

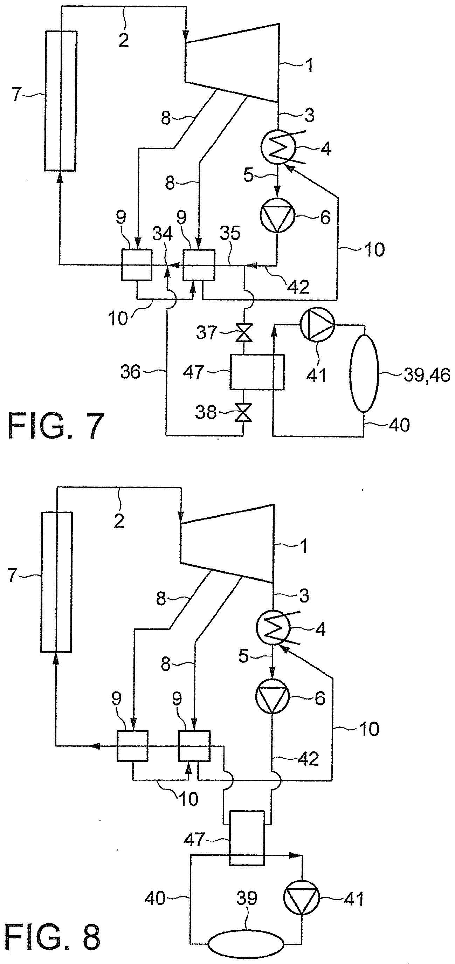

Next, a steam turbine plant is described with reference to Fig. 7.

In the steam turbine plant shown in Fig. 7, the same part as that of the steam turbine plant shown in Fig. 5 is shown by the same reference number and detailed description thereof is omitted.

As shown in Fig. 7, a heater 47 is installed. The heater 47 shown in Fig. 7 is the heater 47 configured to heat a third feed water 36 by a heat recovery water (third heat source) 40 which recovers an industrial exhaust heat. A temperature of the heat recovery water 40 upon recovery of the industrial exhaust heat is lower, as a circulation flow rate thereof is larger. It is preferable that the flow rate of the heat recovery water 40 is higher than a flow rate of a feed water 42. The third feed water 36 flows into the heater 47, and is heated by the heat recovery water 40 so as to have a higher temperature. After that, the third feed water 36 flows into an outlet or a middle location of a group of feed water heaters 9, and merges with a second feed water 35, which has been heated by the feed water heater 9 disposed on an upstream thereof. A temperature of the third feed water 36 does not raise up to a temperature of the geothermal steam 19. It is preferable that the merging point 34 is located such that the temperature of the second feed water 35 and the temperature of the third feed water 36 are substantially equal to each other, but it is not a must.

A heat quantity of the industrial steam may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary.

For this reason, an output of the feed pump 6 is adjusted so as to adjust a flow rate and a pressure of the feed water 42, and a flow rate ratio between the second feed water 35 and the third feed water 36 is adjusted by adjusting opening degrees of valves 37 and 38, in order that the temperature, the pressure and the flow rate of the steam 2 do not considerably vary. In addition, it is preferable that an output of a coal fired boiler 7 is increased or decreased, and that, depending on cases, a flow rate of the heat recovery water 40 may be increased or decreased by adjusting an output of a recovery water pump 41. At this time, although not shown, a flow-rate adjusting valve may be installed on a downstream of the feed pump 6, so as to adjust the flow rate and the pressure of the feed water 42 by adjusting an opening degree of the flow-rate adjusting valve.

As shown in Fig. 7, if there is the feed water heater 9 downstream of a merging point 34, a merged water is heated by the same. After that, the merged water flows into the coal fired boiler 7, and is heated by the coal fired boiler 7 so as to change to a steam 2. Then, the steam 2 flows into the steam turbine 1. In Fig. 18, the water is heated in parallel by two kinds of heat sources from b to n, and is heated by one kind of heat source from n to i. When the third feed water 36 is not circulated through the heater 47 for some reason or other, the valves 37 ad 38 are totally closed. In general, since a steam flow rate in the waste power generation is sufficiently smaller than a steam flow rate in the combined cycle, even if the flow rate of the steam 2 somewhat lowers, the steam turbine 1 can be operated.

As the Rankine cycle, a received heat quantity is increased by a heat received from the heat recovery water 40, so that a flow rate of the steam 2 is increased to increase an output, while a steam turbine inlet temperature is unchanged. An efficiency of the Rankine cycle is determined only by the area ratio in the TS line diagram, regardless of a flow rate. Although a temperature difference between an extracted steam 8 and the second feed water 35 slightly varies, all the steam constitutes the Rankine cycle of a high temperature and a high pressure. Thus, an efficiency according to this arrangement is equal to the first conventional technique. A highly efficient power generation can be carried out by using the industrial exhaust heat discharged without being efficiently used.

The structure shown in Fig. 7 is nothing more than an example, and the merging point 34 at which the second feed water 35 and the third feed water 36 merge with each other may not be a middle location of the group of two or more feed water heaters 9, but may be located between the most downstream feed water heater and the coal fired boiler 7. In addition, the number of the feed water heaters 9 may be one.

Further, the one or more feed water heaters 9 may be disposed not only on an upstream side of the diverging point of the second feed water 35 and the third feed water 36, but also on a downstream side thereof.

### Other arrangement

Next, a steam turbine plant is described with reference to Fig. 7.

In this arrangement, the heat recovery water 40 recovers the industrial exhaust heat. On the other hand, in this arrangement, the heat recovery water 40 recovers all or a part of an exhaust heat of a fuel battery or an internal combustion engine 46. Herein, the internal combustion engine means a gas engine or a diesel engine, for example. When the fuel battery or the internal combustion engine 46 generates power by using a fossil fuel, a large amount of exhaust heat is generated. The exhaust heat of the large-sized fuel battery or the large-sized internal combustion engine 46, which generates power of a large capacity, is recovered by the heat recovery water 40. In general, the heat recovery water 40 is variously used so that a temperature thereof lowers, and the heat recovery water 40 is finally released to an atmospheric air from a cooling tower so as to be circulated. The heat recovery water 40 is caused to circulate, not through the cooling tower, but through the heater 47. At this time, the heat recovery water 40 may not be variously used but may be caused to circulate directly through the heater 47. A temperature of the heat recovery water 40 upon recovery of the industrial exhaust heat is lower, as a circulation flow rate thereof is larger. It is preferable that the flow rate of the heat recovery water 40 is higher than a flow rate of a feed water 42. Since a pressure of the heat recovery water 40, which is a pressure for a high-temperature high-pressure turbine, is high, the heat recovery water 40 is not generally heated to a temperature as a boiling point at its pressure. A heat quantity of the exhaust heat of the fuel battery or the internal combustion engine 46 may vary depending on an operation of the fuel battery or the internal combustion engine 46, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary.

For this reason, an output of the feed pump 6 is adjusted so as to adjust a flow rate and a pressure of the feed water 42, and a flow rate ratio between a second feed water 35 and a third feed water 36 is adjusted by adjusting opening degrees of valves 37 and 38, in order that the temperature, the pressure and the flow rate of the steam 2 do not considerably vary. In addition, it is preferable that an output of a coal fired boiler 7 is increased or decreased, and that, depending on cases, a flow rate of the heat recovery water 40 is increased or decreased by adjusting an output of a recovery water pump 41. At this time, although not shown, a flow-rate adjusting valve may be installed on a downstream of a feed pump 6, so as to adjust the flow rate and the pressure of the feed water 42 by adjusting an opening degree of the flow-rate adjusting valve.

According to this arrangement, a highly efficient power generation can be carried out by using all or a part of the exhaust heat of the fuel battery 46 which is discharged without being efficiently used.

The structure shown in Fig. 7 is nothing more than an example, and the merging point 34 at which the second feed water 35 and the third feed water 36 merge with each other may not be a middle location of the group of two or more feed water heaters 9, but may be located between the most downstream feed water heater and the coal fired boiler 7. In addition, the number of the feed water heaters 9 may be one.

Further, the one or more feed water heaters 9 may be disposed not only on an upstream side of the diverging point of the second feed water 35 and the third feed water 36, but also on a downstream side thereof.

### Other arrangement

Next, a steam turbine plant is described with reference to Fig. 8.

In the steam turbine plant shown in Fig. 8, the same part as that of the steam turbine plant shown in Fig. 7 is shown by the same reference number and detailed description thereof is omitted.

As shown in Fig. 8, a heater 47 is disposed in series with a group of feed water heaters 9 with respect to a feed water 42. In this arrangement, the heater 47 is configured to heat the feed water 42 by a heat recovery water 40 which recovers an industrial exhaust heat. The feed water 42 is transported to the heater 47, and is heated therein by the heat recovery water 40 so as to have a higher temperature. The feed water 42 flowing out from the heater 47 sequentially flows into the group of feed water heaters 9 and a coal fired boiler 7, and is heated respectively by an extracted steam 8 and an exhaust combustion gas 13, so as to become a steam 2.

Since the industrial exhaust heat has a relatively lower temperature but an amount thereof is large, it is preferable that heat is exchanged between the industrial exhaust heat and the feed water 42, while a temperature difference between the industrial exhaust heat and the feed water 42 is sufficiently maintained. The arrangement of the heater is effective in terms thereof.

A heat quantity of the industrial exhaust heat may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary. For this reason, it is preferable that an output of the feed pump 6 is adjusted so as to adjust a flow rate and a pressure of the feed water 42, that an output of the coal fired boiler is increased or decreased, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

Although the industrial exhaust heat is used in this arrangement, a heat to be used is not limited thereto.

In addition, the heater 47 may be disposed on a middle location of the group of two or more feed water heaters 9, or may be disposed on a downstream side of the group of the feed water heaters 9.

Further, the one or more feed water heaters 9 may be disposed not only on an upstream side of the diverging point of the second feed water 35 and the third feed water 36, but also on a downstream side thereof.

### Other arrangement

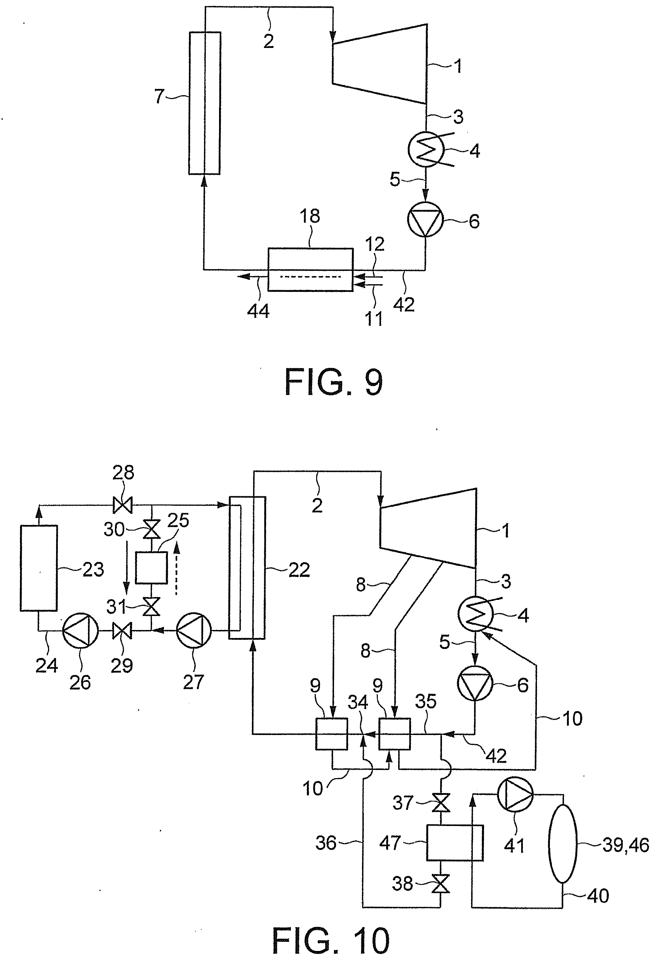

Next, a steam turbine plant is described with reference to Fig. 9.

In the steam turbine plant shown in Fig. 9, the same part as that of the steam turbine plant shown in Fig. 8 is shown by the same reference number and detailed description thereof is omitted.

As shown in Fig. 9, a waste boiler 18 is installed as a heater. In Fig. 9, no air is extracted from a steam turbine 1, and no feed water heater 9 is included. A feed water 42 flows into the waste boiler 18 as a heater, and is heated by a waste exhaust combustion gas 44 so as to have a higher temperature. A temperature of an outlet water of the waste boiler 18 is restricted in terms of a high temperature corrosion. Since a pressure of the outlet water is higher than a pressure in a waste power generation, the outlet water does not basically boil. Thus, the waste boiler 18 functions only as a hot water boiler.

A pressure of a working fluid of the waste boiler 18, which is adjusted by a pump, is a pressure for a high-temperature high-pressure turbine similarly to the technique shown in Fig. 14. Thus, the pressure of the working fluid of the waste boiler 18 is higher than that in the technique shown in Fig. 15. In Fig. 18, an outlet of the waste boiler 18 is shown by 1.

Thereafter, the feed water 42 flows into a coal fired boiler 7, and is heated by the coal fired boiler 7. Then, the feed water 42 flows into the steam turbine 1. In the waste boiler 18, a composition of the waste 11 and an amount of the waste 11 to be treated may considerably vary, but a property of the steam 2 flowing into the steam turbine 1 should not considerably vary. In a general steam turbine plant, a temperature and a pressure of the steam 2 are measured, and the temperature and the pressure should not considerably vary. In addition, in a general steam turbine plant, a flow rate of the steam 2 is obtained by measuring a flow rate of the feed water 42, for example, and the flow rate of the steam 2 should not considerably vary.

For this reason, it is preferable that an output of the feed pump 6 is adjusted so as to adjust a flow rate and a pressure of the feed water 42, that an output of the coal fired boiler 7 is increased or decreased, and that, depending on cases, an amount of the waste 11 to be treated is increased or decreased, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

Similarly to the arrangement shown in Fig. 8, since all the steam constitutes the Rankine cycle of a high temperature and a high pressure, an efficiency according to this arrangement is equal to the technique shown in Fig. 13. This arrangement can be applied to the steam turbine 1 which does not extract air.

Although the waste boiler 18 is used as a heater in this arrangement, a water may be heated by using a heat derived from another heat source.

### Other arrangement

Next, a steam turbine plant is described with reference to Fig. 10.

In the steam turbine plant shown in Fig. 10, the same part as that of the steam turbine plant shown in Fig. 1 is shown by the same reference number and detailed description thereof is omitted.

As shown in Fig. 10, a heating medium 24 (fourth heat source) receives a radiant heat of solar light so as to be heated in a solar heat collector 23. The heated heating medium 24 is diverged into two. One heating medium flows into a solar heat heater 22, and the other heating medium flows into a heat storage tank 25. A heating medium pump 27 is adjusted such that the heating medium flows in a direction drawn by a solid line on the left side of the heat storage tank 25. A part of the heating medium 24 flows into the solar heat heater to heat a feed water 42 to lose its temperature, and flows out therefrom. When a remaining part of the heating medium 24, which has heated the feed water 42, flows into the heat storage tank 25, the heating medium, which has been already therein and has a lower temperature, flows out from the heat storage tank 25, so that the heating medium 24 of a higher temperature is stored in the heat storage tank 25 in the end. After the heating medium 24 has been stored, valves 30 and 31 are totally closed. The heating medium 24 is transported by heating medium pumps 26 and 27. The feed water 42 is transported to the solar heat heater by a feed pump 6, and is heated therein so as to change to a steam 2. During a nighttime when no solar light exists or a time zone when only weak solar light exists, valves 28 and 29 are closed and the heating medium pump 26 is stopped, while the valves 30 and 31 are opened and the heating medium pump 27 is operated, so that the heating medium flows in a direction drawn by dotted lines on the right side of the heat storage tank 25. The feed water 24 is heated by circulating the heating medium 24 between the heat storage tank 25 and the solar heat heater 22, without circulating the heating medium 24 through the solar heat collector 23. The feed water 42 heated by the solar heat is sent to a steam turbine 1 so as to drive the steam turbine 1.

As described above, the steam turbine 1 is a turbine that is driven by a steam manufactured by a heat source derived from solar heat (fourth heat source). In the steam turbine 1, there is installed a heater 47, which is configured to heat a third feed water 36 by a heat recovery water (fifth heat source) 40 that recovers an industrial exhaust heat. A temperature of the heat recovery water 40 upon recovery of the industrial exhaust heat is lower, as a circulation flow rate thereof is larger. It is preferable that the flow rate of the heat recovery water 40 is higher than a flow rate of a feed water 42. Since a pressure of the heat recovery water 40, which is a pressure for a high-temperature high-pressure turbine, is high, the heat recovery water 40 is not generally heated to a temperature as a boiling point at its pressure. When solar heat can be sufficiently obtained such as a daytime, the steam turbine plant is operated in this manner.

The feed water 42 is diverged into the second feed water 35 and the third feed water 36. The second feed water 35 is transported to a group of feed water heaters 9, and is heated therein by an extracted steam 8 so as to have a higher temperature. The third feed water 36 flows into the heater 47, and is heated by the heat recovery water 40 so as to have a higher temperature. Thereafter, the third feed water 36 flows into a middle location or a downstream of the group of the feed water heaters 9, and merges with the second feed water 35 which has been heated by the feed water heater 9 disposed on an upstream of a merging point 34.

It is preferable that the merging point 34 is located such that the temperature of the second feed water 35 and the temperature of the third feed water 36 are substantially equal to each other, but it is not a must. Both of a heat quantity of a solar heat and a heat quantity of an industrial exhaust heat may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary.

For this reason, it is preferable that flow rates of the heating medium are increased or decreased by adjusting outputs of the heating medium pumps 26 and 27, that an output of the feed pump 6 is adjusted so as to adjust a flow rate and a pressure of the feed water 42, that a flow rate ratio between the second feed water 35 and the third feed water 36 is adjusted by adjusting opening degrees of the valves 37 and 38, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

If there is the feed water heater 9 downstream of the merging point 34, the merged water is heated by the same. After that, the merged water flows into the solar heat heater 22, and is heated by the solar heat heater 22 so as to change to a steam 2. Then, the steam 2 flows into the steam turbine 1. When the third feed water 36 is not circulated through the heater 47 for some reason or other, the valves 37 and 38 are totally closed. Since a flow rate of the third feed water 36 is sufficiently smaller than a flow rate of the second feed water 35, even if the flow rate of the steam 2 somewhat lowers, the steam turbine 1 can be operated. During a nighttime when a solar heat is not obtained at all or is obtained insufficiently, an operation similar to the fifth conventional technique is carried out.

As the Rankine cycle, a received heat quantity is increased by a heat received from the heat recovery water 40, so that a flow rate of the steam 2 is increased to increase an output, while a steam turbine inlet temperature is unchanged. An efficiency of the Rankine cycle is determined only by the area ratio in the TS line diagram, regardless of a flow rate. Since all the steam constitutes the Rankine cycle of a high temperature and a high pressure, an efficiency according to this arrangement is equal to the technique shown in Fig. 17.

According to this arrangement, a power generation can be carried out, without lowering an efficiency from the technique shown in Fig. 17, by using the industrial exhaust heat which is discharged without being efficiently used.

The heat storage tank 25 may be omitted. However, in this case, the steam turbine plant cannot be operated only when it can receive a solar heat sufficiently. The structure shown in Fig. 10 is nothing more than an example, and the merging point 34 at which the second feed water 35 and the third feed water 36 merge with each other may not be a middle location of the group of two or more feed water heaters 9, but may be located between the most downstream feed water heater and the coal fired boiler 7. In addition, the number of the feed water heaters 9 may be one.

Further, the one or more feed water heaters 9 may be disposed not only on an upstream side of the diverging point of the second feed water 35 and the third feed water 36, but also on a downstream side thereof. In this case, only one feed water heaters 9 may be provided.

An effect of this arrangement is described with reference to Fig. 19. As shown in Fig. 19(b), a feed water is heated from a condensation temperature to a steam turbine inlet temperature in the following manner. The feed water of a lower temperature zone is heated by a second heating source using an extracted steam, and the heat recovery water 40 which is a heat source other than a solar heat (fifth heat source). The feed water of a higher temperature zone is heated by the solar heat heater 22 using a heat source derived from a solar heat (fourth heat source).

In this manner, since the feed water of the lower temperature zone is heated also by the heat recovery water, and a high temperature steam flowing into the the steam turbine 1 is reliably generated by the the solar heat heater 22 derived from a solar heat, the heat recovery water of a lower temperature, which has not been used heretofore in the steam turbine 1, can be efficiently used to improve a power generation efficiency.

### Other arrangement

Next, a steam turbine plant is described with reference to Fig. 10.

In the previous arrangement described with reference to Fig.10, the heat recovery water 40 recovers the industrial exhaust heat. On the other hand, in this arrangement, the heat recovery water 40 recovers all or a part of an exhaust heat of a fuel battery or an internal combustion engine 46. When the fuel battery or the internal combustion engine 46 generates power by using a fossil fuel, a large amount of exhaust heat is generated. The exhaust heat of the large-sized fuel battery or the large-sized internal combustion engine 46, which generates power of a large capacity, is recovered by the heat recovery water 40. In general, the heat recovery water (fifth heat source) 40 is variously used so that a temperature thereof lowers, and the heat recovery water 40 is finally released to an atmospheric air from a cooling tower so as to be circulated. The heat recovery water 40 is caused to circulate, not through the cooling tower, but through a heater 47. At this time, the heat recovery water 40 may not be variously used but may be caused to circulate directly through the heater 47. A temperature of the heat recovery water 40 upon recovery of the industrial exhaust heat is lower, as a circulation flow rate thereof is larger. It is preferable that the flow rate of the heat recovery water 40 is higher than a flow rate of a feed water 42.

Since a pressure of the heat recovery water 40, which is a pressure for a high-temperature high-pressure turbine, is high, the heat recovery water 40 is not generally heated to a temperature as a boiling point at its pressure. A heat quantity of solar heat may considerably vary, and a heat quantity of the exhaust heat of the fuel battery or the internal combustion engine 46 may vary depending on an operation of the fuel battery or the internal combustion engine 46, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of a water 42, for example, and the flow rate of the steam 2 should not considerably vary.

For this reason, it is preferable that flow rates of the heating medium are increased or decreased by adjusting outputs of heating medium pumps 26 and 27, that an output of the feed pump 6 is adjusted so as to adjust a flow rate and a pressure of the feed water 42, that a flow rate ratio between the second feed water 35 and the third feed water 36 is adjusted by adjusting opening degrees of valves 37 and 38, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

According to this arrangement, a highly efficient power generation can be carried out by using all or a part of the exhaust heat of the fuel battery 46 which is discharged without being efficiently used.

A heat storage tank 25 may be omitted. However, in this case, the steam turbine plant can be operated only when it can receive a solar heat sufficiently. The structure shown in Fig. 10 is nothing more than an example, and the merging point 34 at which the second feed water 35 and the third feed water 36 merge with each other may not be a middle location of the group of two or more feed water heaters 9, but may be located between the most downstream feed water heater and the solar heat heater 22. In addition, the number of the feed water heaters 9 may be one.

Further, the one or more feed water heaters 9 may be disposed not only on an upstream side of the diverging point of the second feed water 35 and the third feed water 36, but also on a downstream side thereof. Only one feed water heaters 9 may be provided.

Furthermore, although there is shown in Fig. 10 the example in which the heat recovery water 40 is heated by an exhaust heat source 39, or the fuel battery or the internal combustion engine 46, the present invention is not limited thereto. The heat recovery water 40 may be heated by an exhaust gas of the gas turbine, and the heater 47 may be heated by the heat recovery water 40.

### Other arrangement

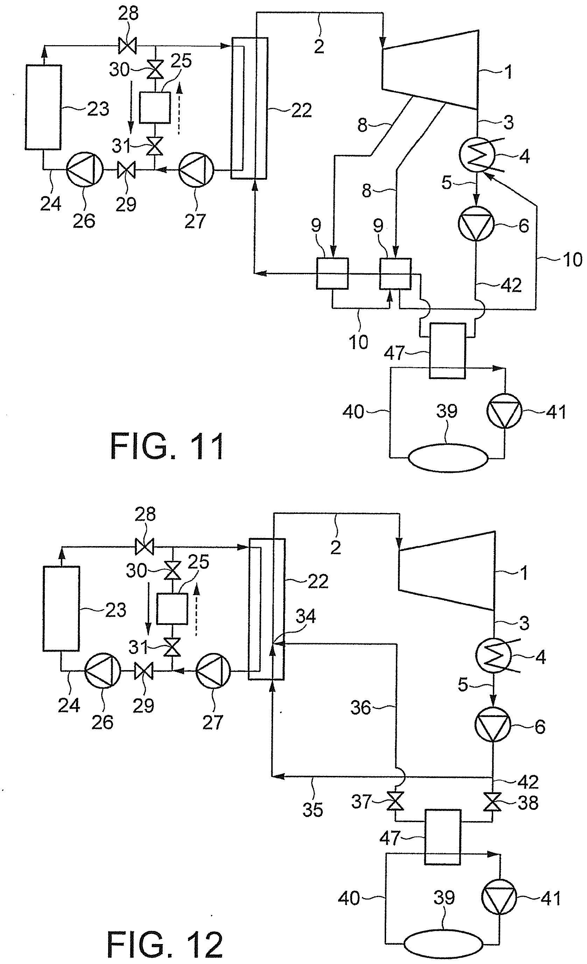

Next, a steam turbine plant is described with reference to Fig. 11.

In the steam turbine plant shown in Fig. 11, the same part as that of the steam turbine plant shown in Fig. 10 is shown by the same reference number and detailed description thereof is omitted.

As shown in Fig. 11, a heater 47 is disposed in series with a solar heat heater 22 and a group of feed water heaters 9, with respect to a feed water 42. As shown in Fig. 11, the heater 47 is configured to heat a steam 2 by a heat recovery water 40 which recovers an industrial exhaust heat. A feed water 42 is transported to the heater 47, and is heated therein by the heat recovery water 40 so as to have a higher temperature. The feed water 42 flowing out from the heater 47 sequentially flows into the group of the feed water heaters 9 and the solar heat heater 22, and is heated respectively by an extracted steam 9 and a heating medium 24, so as to become a steam 2.

Since the industrial exhaust heat has a relatively lower temperature but an amount thereof is large, it is preferable that heat is exchanged between the industrial exhaust heat and the feed water 42, while a temperature difference between the industrial exhaust heat and the feed water 42 is sufficiently maintained. The arrangement of the heater 47 is effective in terms thereof.

Both of a heat quantity of a solar heat and a heat quantity of an industrial exhaust heat may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary.

For this reason, it is preferable that flow rates of the heating medium are increased or decreased by adjusting outputs of heating medium pumps 26 and 27, that an output of a feed pump is adjusted so as to adjust a flow rate and a pressure of the feed water 42, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve.

Although the industrial exhaust heat is used in this arrangement, a heat to be used is not limited thereto. In addition, similarly to the arrangement as described with reference to Fig.9, a feed water heater may be omitted. Moreover, a heat storage tank 25 may be omitted. However, in this case, the steam turbine plant can be operated only when it can receive a solar heat sufficiently.

In addition, the heater 47 may be disposed on a middle location of the group of two or more feed water heaters 9, or may be disposed on a downstream side of the group of the feed water heaters 9.

Further, the one or more feed water heaters 9 may be disposed not only on an upstream side of the diverging point of the second feed water 35 and the third feed water 36, but also on a downstream side thereof.

### Other arrangement

Next, a steam turbine plant is described with reference to Fig. 12.

In the steam turbine plant shown in Fig. 12, the same part as that of the steam turbine plant shown in Fig. 10 is shown by the same reference number and detailed description thereof is omitted.

During a daytime or the like when a solar heat can be sufficiently obtained, the steam turbine plant is operated in the following manner. A feed water 42 is diverged into a second feed water 35 and a third feed water 36. The second feed water 35 is transported to a solar heat heater 22, and is heated therein so as to have a higher temperature. The third feed water 36 flows into a heater 47, and is heated by a heat recovery water 40 so as to have a higher temperature. After that, the third feed water 36 flows into a middle location of the solar heat heater 22 and merges with the second feed water 35, which has been heated at a position in the solar heat hater 22 that is upstream of a merging point 34.

It is preferable that the merging point 34 is located such that the temperature of the second feed water 35 and the temperature of the third feed water 36 are substantially equal to each other, but it is not a must. Both of a heat quantity of a solar heat and a heat quantity of an industrial exhaust heat may considerably vary, but a property of the steam 2 flowing into the steam turbine 1 should not considerably vary. In a general steam turbine plant, a temperature and a pressure of the steam 2 are measured, and the temperature and the pressure should not considerably vary. In a general steam turbine plant, a flow rate of the steam is obtained by measuring a flow rate of the water 42, for example, and the flow rate of the steam 2 should not considerably vary.

For this reason, it is preferable that flow rates of the heating medium are increased or decreased by adjusting outputs of heating medium pumps 26 and 27, that an output of the feed pump 6 is adjusted so as to adjust a flow rate and a pressure of the feed water 42, that a flow rate ratio between the second feed water 35 and the third feed water 36 is adjusted by adjusting opening degrees of valves 37 and 38, and that, depending on cases, a flow rate of the heat recovery water 40 is increased or decreased by adjusting an output of a recovery water pump 41, in order that the temperature, the pressure and the flow rate of the steam 2 do not considerably vary. At this time, although not shown, a flow-rate adjusting valve may be installed on a downstream of the feed pump 6, so as to adjust the flow rate and the pressure of the feed water 42 by adjusting an opening degree of the flow-rate adjusting valve. The merged water is heated by the solar heat heater 22 at a position downstream of the merging point 34 so as to change to a steam 2. Then, the steam 2 flows into a steam turbine 1. When the third feed water 36 is not circulated through a heater 47 for some reason or other, the valves 37 and 38 are totally closed. Since a flow rate of the third feed water 36 is sufficiently smaller than a flow rate of the second feed water 35, even if the flow rate of the steam 2 somewhat lowers, the steam turbine 1 can be operated. During a nighttime when a solar heat is not obtained at all or is obtained insufficiently, an operation similar to the seventeenth technique is carried out.

As the Rankine cycle, a received heat quantity is increased by a heat received from the heat recovery water 40, so that a flow rate of the steam 2 is increased to increase an output, while a steam turbine inlet temperature is unchanged. An efficiency of the Rankine cycle is determined only by the area ratio in the TS line diagram, regardless of a flow rate. Since all the steam constitutes the Rankine cycle of a high temperature and a high pressure, an efficiency according to this arrangement is equal to the technique shown in Fig. 17.

According to this arrangement, a power generation can be carried out, without lowering an efficiency from the technique shown in Fig. 17, by using the industrial exhaust heat which is discharged without being efficiently used.

In Fig. 12, although an extracted steam 9 from the steam turbine 1 and a feed water heater 8 do not exist, they may exist. In addition, a heat storage tank 25 may be omitted. However, in this case, the steam turbine plant can be operated only when it can receive a solar heat sufficiently.

The aforementioned above embodiments are taken by way of examples, and the scope of the invention is not limited thereto.

- 1: Steam turbine
- 2: Steam
- 3: Turbine exhaust air
- 4: Condenser
- 5: Condensation
- 6: Feed pump
- 7: Coal fired boiler
- 8: Extracted steam
- 9: Feed water heater
- 10: Drainage water
- 11: Waste
- 12: Combustion air
- 13: Exhaust combustion gas
- 14: Gas turbine exhaust air
- 15: Exhaust heat boiler
- 18: Waste boiler
- 19: Geothermal steam
- 20: Hot water
- 21: Ground
- 22: Solar heat heater
- 23: Solar heat collector
- 24: Heating medium
- 25: Heat storage tank
- 26: Heating medium pump
- 27: Heating medium pump
- 28: Valve
- 29: Valve
- 30: Valve
- 31: Valve
- 32: Saturated water line
- 33: Saturated steam line
- 34: Merging point
- 35: Second feed water
- 36: Third feed water
- 37: Valve
- 38: Valve
- 39: Exhaust heat source
- 40: Heat recovery water
- 41: Heat recovery water pump
- 42: Feed water
- 43: Coal
- 44: Waste exhaust combustion gas
- 46: Fuel battery or internal combustion engine
- 47: Heater

## Claims

1. A steam turbine plant comprising:
a steam turbine (1);
a heating unit configured to produce steam from water, the steam to be supplied to the steam turbine;
a means for diverging the water into a second feed water (35) and a third feed water (36) on an upstream side of the heating unit; wherein the heating unit includes a first heater (15) using a first heat source (15) using a fossil fuel for heating the second feed water and producing a heated second feed water and the steam from the heated second feed water and
a third heater (18, 47) using a third heat source (44, 19, 40) using other than a solar heat, not using a fossil fuel for heating the third feed water and **characterized in that** the heated third feed water is merged into the heated second feed water flowing in the first heater.

2. The steam turbine plant according to claim 1, wherein
the third heat source includes an exhaust combustion gas of a waste combustion furnace.

3. The steam turbine plant according to claim 1, wherein
the third heat source includes a steam or a hot water taken out from a ground.

4. The steam turbine plant according to claim 1, wherein
the third heat source includes an industrial exhaust heat.

5. The steam turbine plant according to claim 1, wherein
the third heat source includes an exhaust heat of a fuel battery (46) or an internal combustion engine (46).

6. The steam turbine plant according to any one of claims 1 to 4, wherein
the first heat source includes an exhaust gas of a gas turbine driven by burning a fossil fuel.

7. The steam turbine plant according to any one of claims 1 to 5, wherein
the first heat source includes an exhaust combustion gas in a coal fired boiler (7).

## Patentansprüche

1. Dampfturbinenkraftwerk, umfassend:
eine Dampfturbine (1);
eine Heizeinheit, die dazu konfiguriert ist, Dampf aus Wasser zu erzeugen, wobei der Dampf zu der Dampfturbine geführt werden soll;
ein Mittel zum Verzweigen des Wassers in ein zweites Speisewasser (35) und ein drittes Speisewasser (36) auf einer Stromaufwärts-Seite der Heizeinheit;
wobei die Heizeinheit einen ersten Heizer (15), der eine erste Wärmequelle (15) verwendet, die einen fossilen Brennstoff zum Erwärmen des zweiten Speisewassers verwendet und ein erwärmtes zweites Speisewasser und den Dampf aus dem erwärmten zweiten Speisewasser erzeugt, und
einen dritten Heizer (18, 47), der eine dritte Wärmequelle (44, 19, 40) verwendet, die von einer Solarwärme verschieden ist und einen fossilen Brennstoff nicht verwendet, zum Erwärmen des dritten Speisewassers, und **dadurch gekennzeichnet, dass** das erwärmte dritte Speisewasser mit dem erwärmten zweiten Speisewasser vereinigt wird, das im ersten Heizer strömt.

2. Dampfturbinenkraftwerk nach Anspruch 1, wobei
die dritte Wärmequelle eine Abgasverbrennung von Gas eines Abfallverbrennungsofens umfasst.

3. Dampfturbinenkraftwerk nach Anspruch 1, wobei
die dritte Wärmequelle einen Dampf oder ein heißes Wasser umfasst, das aus einem Boden entnommen ist.

4. Dampfturbinenkraftwerk nach Anspruch 1, wobei
die dritte Wärmequelle eine industrielle Abgaswärme umfasst.

5. Dampfturbinenkraftwerk nach Anspruch 1, wobei
die dritte Wärmequelle eine Abgaswärme einer Brennstoffbatterie (46) oder eines Verbrennungsmotors (46) umfasst.

6. Dampfturbinenkraftwerk nach einem der Ansprüche 1 bis 4, wobei
die erste Wärmequelle ein Abgas einer Gasturbine umfasst, die durch Verbrennen eines fossilen Brennstoffs angetrieben wird.

7. Dampfturbinenkraftwerk nach einem der Ansprüche 1 bis 5, wobei
die erste Wärmequelle ein Abgasverbrennungsgas in einem kohlegeheizten Kessel (7) umfasst.

## Revendications

1. Installation de turbine à vapeur comprenant :
une turbine à vapeur (1) ;
une unité de chauffage configurée pour produire de la vapeur à partir d'eau, la vapeur devant être acheminée à la turbine à vapeur ;
un moyen pour répartir l'eau en une deuxième eau d'alimentation (35) et une troisième eau d'alimentation (36) du côté amont de l'unité de chauffage ;
dans laquelle l'unité de chauffage comprend
un premier dispositif de chauffage (15) utilisant une première source de chaleur (15) utilisant un combustible fossile pour le chauffage de la deuxième eau d'alimentation et la production d'une deuxième eau d'alimentation chauffée, ainsi que la vapeur provenant de la deuxième eau d'alimentation chauffée, et
un troisième dispositif de chauffage (18, 47) utilisant une troisième source de chaleur (44, 19, 40) utilisant autre chose qu'une chaleur solaire, n'utilisant pas un combustible fossile pour le chauffage de la troisième eau d'alimentation; et
**caractérisée en ce que** la troisième eau d'alimentation chauffée est fusionnée avec la deuxième eau d'alimentation chauffée s'écoulant dans le premier dispositif de chauffage.

2. Installation de turbine à vapeur selon la revendication 1, dans laquelle la troisième source de chaleur comprend des gaz de combustion d'échappement d'un four d'incinération de déchets.

3. Installation de turbine à vapeur selon la revendication 1, dans laquelle la troisième source de chaleur comprend une vapeur ou une eau chaude extraite d'un sol.

4. Installation de turbine à vapeur selon la revendication 1, dans laquelle la troisième source de chaleur comprend une chaleur de gaz d'échappement industriels.

5. Installation de turbine à vapeur selon la revendication 1, dans laquelle la troisième source de chaleur comprend une chaleur de gaz d'échappement d'une pile à combustible (46) ou d'un moteur à combustion interne (46).

6. Installation de turbine à vapeur selon l'une quelconque des revendications 1 à 4, dans laquelle la première source de chaleur comprend des gaz d'échappement d'une turbine à gaz entraînée par la combustion d'un combustible fossile.

7. Installation de turbine à vapeur selon l'une quelconque des revendications 1 à 5, dans laquelle la première source de chaleur comprend des gaz de combustion d'échappement dans une chaudière à charbon (7).
